# EUROPÄISCHE PATENTSCHRIFT

(11) **EP 3 083 456 B1**
(45) Veröffentlichungstag und Bekanntmachung des Hinweises auf die Patenterteilung: **07.03.2018**
(21) Anmeldenummer: 14824392.6
(22) Anmeldetag: 12.12.2014
(51) Int. Cl.: B65G 21/14, B65B 35/24, B65G 47/252

(54) **PRODUKTAUFSTELLVORRICHTUNG**
PRODUCT STAND-UP DEVICE
DISPOSITIF DE DISPOSITION DE PRODUITS

(30) Priorität: 17.12.2013 DE 102013226317
(43) Veröffentlichungstag der Anmeldung: 26.10.2016
(73) Patentinhaber: Robert Bosch GmbH, 70442 Stuttgart (DE)
(72) Erfinder: ROEHRING, Alexander, 79798 Jestetten- Altenburg (DE); RUPF, Martin, CH-8404 Winterthur (CH); NICKLAUS, Patrick, CH-8240 Thayngen (CH)
(86) Internationale Anmeldenummer: PCT/EP2014/077512
(87) Internationale Veröffentlichungsnummer: WO 2015/091247

(56) Entgegenhaltungen:
- EP-A1- 0 057 386
- EP-A1- 1 722 438
- EP-A2- 2 149 516
- WO-A2-2010/102963
- US-A- 4 222 478
- US-A- 4 744 201

## Beschreibung

### Stand der Technik

Es sind bereits Produktaufstellvorrichtungen zu einer Aufstellung von Produkten mehrerer Produktkolonnen in Stapelreihen, die jeweils einer Produktkolonne zugeordnet sind, mit zumindest einer für die mehreren Produktkolonnen gemeinsamen Zufuhreinheit für flach liegende Produkte und/oder mit zumindest einer Abtransporteinheit für in den Stapelreihen aufgestellte Produkte, mit zumindest einer Aufrichtbahn zur Aufrichtung der Produkte zumindest einer Produktkolonne, und mit einer Mehrzahl von Verschubmitteln, welche jeweils einer Stapelreihe zugeordnet und dazu vorgesehen sind, eine Aufnahmelücke für eine Anstellung eines folgenden Produkts der jeweiligen Produktkolonne zu erzeugen. Die Verschubmittel weisen dabei ein gemeinsames Antriebsmittel auf und sind beispielsweise als auf einer gemeinsamen Welle angeordnete Separierräder ausgebildet. EP 2 149 516 A2 beschreibt eine Vorrichtung nach dem Oberbegriff des Anspruchs 1.

### Offenbarung der Erfindung

Die Erfindung entspricht der Produktaufstellungvorrichtung nach Anspruch 1 und geht aus von einer Produktaufstellvorrichtung zu einer Aufstellung von Produkten mehrerer Produktkolonnen in Stapelreihen, die jeweils einer Produktkolonne zugeordnet sind, mit zumindest einer für die mehreren Produktkolonnen gemeinsamen Zufuhreinheit für flach liegende Produkte und/oder mit zumindest einer Abtransporteinheit für in den Stapelreihen aufgestellte Produkte, mit zumindest einer Aufrichtbahn zur Aufrichtung der Produkte zumindest einer Produktkolonne, und mit einer Mehrzahl von Verschubmitteln, welche jeweils einer Stapelreihe zugeordnet und dazu vorgesehen sind, eine Aufnahmelücke für eine Anstellung eines folgenden Produkts der jeweiligen Produktkolonne zu erzeugen.

Es wird vorgeschlagen, dass jedes Verschubmittel ein separat steuerbares Antriebsmittel aufweist.

Unter einem "Zufuhreinheit" soll insbesondere eine Einheit verstanden werden, die zumindest ein Transportmittel, beispielsweise ein als Transportband ausgebildetes Transportmittel, aufweist und die Produkte der Produktkolonnen von einem Anlieferungsort, vorzugsweise einem Herstellungsort der Produkte wie einem Ofen, übernimmt und der Aufrichtbahn zuführt. Unter einer "Abtransporteinheit" soll insbesondere eine Einheit verstanden werden, auf die die Produkte nach Durchlauf der Aufrichtbahn in Stapelreihen aufgestellt werden und die die Stapelreihen zu einer Weiterbehandlung, beispielsweise einer Verpackung, weitertransportiert. Unter einer "Aufrichtbahn" soll insbesondere eine Strecke verstanden werden, die dazu vorgesehen ist, ein in einer liegenden Position in die Aufrichtbahn eintretendes Produkt durch den Durchlauf der Strecke in eine stehende Position aufzurichten. Grundsätzlich kann ein aufgerichtetes Produkt nach Aufrichtung durch die Aufrichtbahn aus der stehenden Position in eine gekippte Position, vorzugsweise eine in Abfuhrrichtung gekippte Position, gebracht werden. Bevorzugt ist die Aufrichtbahn als bogenförmige Rutsche ausgebildet. Die Aufrichtbahn kann alternativ beispielsweise als eine schräg verlaufende Ebene und/oder eine schräge und/oder bogenförmige Umlenkstrecke eines umlaufenden Bandes und/oder Rundriemens ausgebildet sein. Bevorzugt ist die Aufrichtbahn als ein zu der zumindest einem Zufuhreinheit und/oder zu dem zumindest einer Abtransporteinheit zusätzliches Mittel ausgebildet. Grundsätzlich kann die Aufrichtbahn jedoch auch einstückig mit der zumindest einen Zufuhreinheit und/oder der zumindest einen Abtransporteinheit ausgebildet sein. Die Produktaufstellvorrichtung weist eine für alle Produktkolonnen gemeinsame Zufuhreinheit und für jede Produktkolonne eine separate Abtransporteinheit auf. Die Produktaufstellvorrichtung für jede Produktkolonne umfasst eine separate Aufrichtbahn. Die Produkte, die mit der Produktaufstellvorrichtung aufgestellt werden, können unterschiedliche Formen aufweisen, beispielsweise quaderförmige Formen mit rechteckiger Grundfläche oder halbovale Formen. Die Produkte können beispielsweise von Gebäckstücken gebildet sein.

Unter einem "Verschubmittel" soll insbesondere ein von Mitteln der Abtransporteinheit verschiedenes Mittel verstanden werden, welches dazu vorgesehen ist, zumindest ein aufgerichtetes Produkt in Abfuhrrichtung zu verschieben, um eine Aufnahmelücke für ein folgendes, an die Stapelreihe anzustellendes Produkt zu erzeugen. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Insbesondere verschiebt das Verschubmittel ein aufgerichtetes Produkt in Abfuhrrichtung, welches ein Endglied der Stapelreihe bildet, wenn zwischen dem Endglied und einem Aufsetzpunkt durch die Aufrichtbahn keine oder eine zu geringe Lücke besteht. Besteht bereits ohne eine Verschiebung des aufgerichteten Produkts eine ausreichende Lücke für eine Anstellung eines folgenden Produkts, so kann das Verschubmittel zu einem Stillstand oder zu einer Bewegung, bei der das entsprechende Produkt durch das Verschubmittel unbeeinflusst bleibt angesteuert werden. Das Verschubmittel kann beispielsweise als ein Separierrad mit vorstehenden Zahnelementen ausgebildet sein, das rotatorisch angetrieben wird, wobei durch eine Rotation des Separierrads zumindest ein vorstehendes Zahnelement mit einem aufgerichteten Produkt in Kontakt kommt und eine Kraft auf das aufgerichteten Produkt zur Verschiebung in Abfuhrrichtung ausübt. In alternativen Ausgestaltungen kann das Verschubmittel beispielsweise als eine Kurbelschwinge und/oder eine Luftdüse, welche durch einen Luftstrom oder einen Luftstoß das aufgerichtete Produkt verschiebt, ausgebildet sein. Zusätzlich kann das Verschubmittel dazu vorgesehen sein, das zu verschiebende aufgerichtete Produkt zusätzlich zu der Verschiebung zu kippen, so dass es teilweise auf einem benachbarten Produkt in der Stapelreihe aufliegt. Auch kann das Verschubmittel dazu vorgesehen sein, zu vermeiden, das ein aufgerichtetes Produkt bei Aufstellung auf ein als Förderband ausgebildetes Abtransportmittel durch eine Vorwärtsbewegung des Förderbands umkippt. Unter einer "Aufnahmelücke" soll insbesondere ein freier Bereich an einem hinteren Ende der Stapelreihe verstanden werden, der eine Anstellung eines weiteren Produkts ermöglicht.

Unter einem "Antriebsmittel" soll insbesondere ein Mittel verstanden werden, welches eine Antriebskraft auf das Verschubmittel überträgt, beispielsweise eine durch einen Motor bewegte Welle, auf der ein als Separierrad ausgebildetes Verschubmittel drehfest gelagert ist, oder als ein Pneumatiksystem, das eine Luftdüse mit Druckluft versorgt. Darunter, dass "jedes Verschubmittel ein separat steuerbares Antriebsmittel aufweist" soll insbesondere verstanden werden, dass jedes Verschubmittel ein Antriebsmittel aufweist, welches unabhängig von Antriebsmitteln anderer Verschubmittel betrieben werden kann. Insbesondere kann so jedes Verschubmittel mit einer unterschiedlichen Antriebsgeschwindigkeit betrieben werden. Es kann insbesondere eine Produktaufstellvorrichtung mit passend zu jeweiligen Bedingungen einzelner Produktkolonnen antreibbaren Verschubmitteln zur Verfügung gestellt werden.

Ferner wird vorgeschlagen, dass die Produktaufstellvorrichtung zumindest eine Sensoreinheit umfasst, die dazu vorgesehen ist, zumindest Produkte einer Produktkolonne zu detektieren. Bevorzugt ist die Sensoreinheit zusätzlich dazu vorgesehen Positionierungsdaten der Produkte der zumindest einen Produktkolonne aufzunehmen. Unter einer "Sensoreinheit" soll insbesondere eine Einheit mit zumindest einem Sensorelement verstanden werden, das dazu vorgesehen ist, Produkte einer Produktkolonne zu erfassen und die Positionierungsdaten des Produkts zu erfassen. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Das Sensorelement ist bevorzugt als optisches Sensorelement, beispielsweise als eine Kamera, als ein Lichttaster oder als eine Lichtschranke ausgebildet. In alternativen Ausgestaltungen kann das Sensorelement als ein Sensorelement ausgebildet sein, das auf Messung anderer physikalischer Messgrößen beruht, beispielsweise als ein induktives Sensorelement oder als ein Drucksensorelement. Die Sensoreinheit kann Produkte an unterschiedlichen Orten innerhalb der Produktaufstellvorrichtung detektieren oder Positionierungsdaten der Produkte der Produktkolonnen an unterschiedlichen Orten aufnehmen, beispielsweise vor einem Eintritt in die Aufrichtbahn und/oder während eines Durchlaufs der Aufrichtbahn und/oder nach einem Durchlauf der Aufrichtbahn. Auch kann die Produktaufstellvorrichtung mehrere Sensoreinheiten aufweisen, die jeweils Positionierungsdaten von Produkten zumindest einer Produktkolonne jeweils an einer Position aufnehmen, so dass beispielsweise eine erste Sensoreinheit Positionierungsdaten der Produkte vor einem Eintritt in die Aufrichtbahn aufnimmt und eine zweite Sensoreinheit Positionierungsdaten der Produkte bei einem Durchlauf der Aufrichtbahn aufnimmt. Bevorzugt umfasst die zumindest eine Sensoreinheit für jede Produktkolonne ein separates Sensorelement. Zusätzlich oder alternativ zu Daten über detektierte Produkte und/oder Positionierungsdaten von Produkten, die durch die zumindest eine Sensoreinheit gewonnen wurden, können für eine Ansteuerung des zumindest einen Verschubmittels auch Daten verwendet werden, die von einer der Produktaufstellvorrichtung vorgelagerten Einheit, beispielsweise einer Einheit zur Herstellung der Produkte, und/oder einer der Produktaufstellvorrichtung nachgelagerten Einheit, beispielsweise einer Verpackungsvorrichtung, über eine Datenverbindung an die Produktaufstellvorrichtung zur Ansteuerung der Verschubmittel übermittelt werden. Es kann insbesondere eine Einheit zur Gewinnung von Daten für eine an aktuelle Prozessbedingungen in einzelnen Produktkolonnen angepasste Steuerung der Produktaufstellvorrichtung zur Verfügung gestellt werden.

Des Weiteren wird vorgeschlagen, dass die Produktaufstellvorrichtung zumindest eine Antriebssteuereinheit aufweist, die dazu vorgesehen ist, zumindest eines der Verschubmittel in Abhängigkeit der aufgenommenen Positionierungsdaten anzusteuern. Unter einer "Antriebsteuereinheit" soll insbesondere eine zur Steuerung des Antriebsmittels des Verschubmittels vorgesehene Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Darunter, dass "die Antriebssteuereinheit dazu vorgesehen ist, zumindest eines der Verschubmittel in Abhängigkeit der aufgenommenen Positionierungsdaten anzusteuern" soll insbesondere verstanden werden, dass die Antriebssteuereinheit anhand der aufgenommenen Positionierungsdaten das Antriebsmittel zu einem Verschub eines Produkts der Stapelreihe ansteuert, um eine Aufnahmelücke für das Produkt, dessen Positionierungsdaten aufgenommen wurden, zu erzeugen, so dass das Produkt an die Stapelreihe angestellt werden kann. Beispielsweise kann die Antriebsteuereinheit anhand von Positionierungsdaten, die von einem Produkt aufgenommen wurden, während das Produkt sich auf der Aufrichtbahn befindet, das Verschubmittel passend ansteuern, dass eine Aufnahmelücke für das Produkt zu einem Zeitpunkt bereitsteht, in dem das Produkt einen Durchlauf der Aufrichtbahn beendet. In einer alternativen Ausgestaltung kann die Antriebsteuereinheit anhand von Positionierungsdaten, die von einem Produkt aufgenommen wurden, bevor es die Aufrichtbahn erreicht, sowie von Daten über eine Antransportgeschwindigkeit des Produkts an die Aufrichtbahn und eine Durchlaufsgeschwindigkeit durch die Aufrichtbahn, das Verschubmittel zu einer Verschiebung zumindest eines Produkts der Stapelreihe passend ansteuern, so dass eine Aufnahmelücke für das Produkt zu einem Zeitpunkt bereitsteht, in dem das Produkt einen Durchlauf der Aufrichtbahn beendet. Insbesondere ist die Antriebssteuereinheit dazu vorgesehen, eine Verschiebeleistung des Verschubmittels über das Antriebsmittel abhängig von einer Dichte in der Produktkolonne zur Aufstellung in die Stapelreihe ankommenden Produkt mit einer höheren oder niedrigeren Leistung anzusteuern. Es kann insbesondere eine Sicherstellung einer rechtzeitigen Erzeugung einer Aufnahmelücke erreicht werden.

In einer Weiterbildung der Erfindung wird vorgeschlagen, dass die Antriebssteuereinheit dazu vorgesehen ist, das zumindest eine der Verschubmittel synchronisiert zu einem auf der Aufrichtbahn befindlichen Produkt anzusteuern. Unter "synchronisiert zu einem auf der Aufrichtbahn befindlichen Produkt ansteuern" soll insbesondere verstanden werden, dass die Antriebsteuereinheit das Antriebsmittel des Verschubmittels in Abhängigkeit von einem detektierten, die Aufrichtbahn durchlaufenden Produkt so ansteuert, dass während oder nach Durchgang des auf der Aufrichtbahn befindlichen Produkts eine Aufnahmelücke erzeugt wird. Es kann insbesondere eine gegen plötzlich auftretende Betriebsstörung besonders robuste Erzeugung einer Aufnahmelücke erreicht werden.

Weiterhin wird vorgeschlagen, dass die Antriebssteuereinheit dazu vorgesehen ist, das zumindest eines der Verschubmittel für jedes Produkt lediglich mit einem einzigen Verschiebetakt anzusteuern. Unter einem "Verschiebetakt" soll insbesondere ein einzelner Betätigungsvorgang des Verschubmittels verstanden werden, der eine Verschiebung eines Produkts der Stapelreihe einer Produktkolonne bewirkt, beispielsweise eine einzelne Teilumdrehung eines als Separierrad ausgebildeten Verschubmittels, mittels der ein einzelnes Zahnelement in Kontakt mit dem zu verschiebenden Produkt gebracht werden kann und dieses gegebenenfalls verschiebt oder ein einzelner Luftstoß eines als Luftdüse ausgebildeten Verschubmittels, welcher einen zur Verschiebung des zu verschiebenden Produkts ausreichenden Kraftstoß auf das Produkt überträgt. Eine Teilumdrehung des als Separierrad ausgebildeten Verschubmittels, bei der nacheinander zwei Zahnelemente in Kontakt mit dem zu verschiebenden Produkt gebracht werden und dieses verschieben, entspricht zwei Verschiebetakten. Es kann insbesondere eine geringe mechanische Belastung von zu verschiebenden Produkten erreicht werden. Erfindungsgemäß umfasst die Produktaufstellvorrichtung eine Mehrzahl von separat steuerbaren Linearverschiebungseinheiten, die zu einer Linearverschiebung zumindest der verschiedenen Verschubmittel vorgesehen sind. Unter einer "Linearverschiebungseinheit" soll insbesondere eine Einheit verstanden werden, die zumindest ein Verschubmittel entlang zumindest einer Linearachse innerhalb eines vorgegebenen Verschiebungsbereichs verschiebt. Bevorzugt ist die Linearachse parallel zu einer Achse, entlang der die Reihenglieder der Stapelreihen nebeneinander aufgestellt sind, ausgebildet. Bevorzugt ist jeweils eine Linearverschiebungseinheit einem Verschubmittel einer Produktkolonne zugeordnet. Bevorzugt ist die Linearverschiebungseinheit dazu vorgesehen, das zumindest eine Verschubmittel synchronisiert mit einer Linearverschiebung eines Endpunkts der Aufrichtbahn zu verschieben, um so einen Aufstellort eines weiteren, die Aufrichtbahn durchlaufenden Produkts zu variieren, Insbesondere können die Linearverschiebungseinheiten dazu vorgesehen sein, zusätzlich zu den Verschubmitteln einer Produktkolonne zumindest eine Teileinheit einer Zufuhreinheit und/oder eine Abtransporteinheit der Produktkolonne und/oder eine Aufrichtbahn und/oder eine der Produktkolonne zugeordnete Sensoreinheit zu verschieben. In einer beispielhaften Nutzung der Linearverschiebungseinheiten wird bei einer Stockung eines Abtransports der Stapelreihe durch eine Linearverschiebung des Verschubmittels und des Endpunkts der Aufrichtbahn ein Aufstellort des weiteren, die Aufrichtbahn durchlaufenden Produkts, entgegen der Abtransportrichtung verschoben, so dass ein Aufbau der Stapelreihe trotz Stockung des Abtransports fortgesetzt wird. Entsprechend kann bei Stockung einer Zufuhr ein Aufstellort nach vorne, in Abtransportrichtung, verschoben werden. Auch kann die Linearverschiebung des Verschubmittels dazu genutzt werden, eine Größe der Aufnahmelücke an eine Größe anzustellender Produkte anzupassen. Es kann insbesondere eine einfach an unterschiedliche Produktgrößen, Zufuhrbedingungen und Abtransportbedingungen anpassbare Produktaufstellvorrichtung erreicht werden.

Weiterhin wird vorgeschlagen, dass die Produktaufstellvorrichtung zumindest eine Verschiebungssteuereinheit aufweist, die dazu vorgesehen ist, zumindest eine der Linearverschiebungseinheiten in Abhängigkeit der aufgenommenen Positionierungsdaten anzusteuern. Unter einer "Verschiebungssteuereinheit" soll insbesondere eine Steuereinheit verstanden werden, die zur Ansteuerung zumindest einer der Linearverschiebungseinheiten vorgesehen ist. Bevorzugt ist die als Verschiebungssteuereinheit ausgebildete Steuereinheit auch als Antriebssteuereinheit für das der zumindest einen Linearverschiebungseinheit zugeordnetem Verschubmittel ausgebildet. Grundsätzlich können auch zwei separate Steuereinheiten als voneinander getrennte Verschiebungssteuereinheit und Antriebssteuereinheit eingesetzt werden. Es kann insbesondere eine mit geringem Aufwand an unterschiedliche Produktgrößen und Abtransportbedingungen anpassbare Produktaufstellvorrichtung erreicht werden.

Des Weiteren wird vorgeschlagen, dass die zumindest eine Sensoreinheit dazu vorgesehen ist, zumindest Positionierungsdaten eines zuletzt verschobenen Produkts aufzunehmen. Insbesondere ist die Sensoreinheit dazu vorgesehen, eine Ausrichtung des zuletzt verschobenen Produkts zu überprüfen und ein umgekipptes Endglied einer Stapelreihe zu detektieren. Es können insbesondere Daten für eine frühzeitige Problemerkennung und Anpassung von Betriebsparametern der Produktaufstellvorrichtung an Problemsituationen gewonnen werden.

Ferner wird vorgeschlagen, dass die Produktaufstellvorrichtung Aufrichthilfseinheiten umfasst, die jeweils einer Produktkolonne zugeordnet und dazu vorgesehen sind, eine Aufrichtung der Produkte zumindest zu unterstützen. Insbesondere sind die Aufrichthilfseinheiten dazu vorgesehen, ein Umkippen von aufgerichteten Produkten der Stapelreihe der Produktkolonnen in einen liegenden Zustand und eine Versperrung einer Aufnahmelücke durch ein umgekipptes Endglied der Stapelreihe zu vermeiden. Es kann insbesondere eine Anzahl von Betriebsstörungen vermindert werden.

Weiterhin wird vorgeschlagen, dass die Aufrichthilfseinheiten jeweils zumindest eine Luftdüse aufweisen. Insbesondere können die Luftdüsen zur Abgabe eines permanenten Luftstroms ausgebildet sein. Bevorzugt sind die Luftdüsen dazu vorgesehen, getaktet betrieben zu werden. Es kann insbesondere eine konstruktiv einfach ausgeführte Aufrichthilfseinheit erreicht werden.

Des Weiteren wird vorgeschlagen, dass die Zufuhreinheit zumindest eine Zwischentransporteinheit mit einer Mehrzahl von in einer Transportlänge veränderlichen Zwischentransportbahnen, die jeweils einer Produktkolonne zugeordnet sind, aufweist. Unter einer "Zwischentransporteinheit" soll insbesondere eine Transporteinheit verstanden werden, die Produkte von einer vorgelagerten Transporteinheit der Zufuhreinheit übernimmt und zu der Aufrichtbahn oder einer weiteren Zwischentransporteinheit transportiert. Unter "in einer Transportlänge veränderlichen Zwischentransportbahnen" sollen insbesondere Transportbahnen verstanden werden, die Mittel zur Veränderung der Transportlänge aufweisen. Unter einer "Transportlänge" soll insbesondere eine Streckenlänge eines Teilstücks der Transportbahn, auf der ein Produkt auf der Transportbahn transportiert wird, verstanden werden. Beispielsweise kann eine Transportlänge von einer Streckenlänge eines Teilstücks der Transportbahn von einem Aufsetzpunkt, an dem die Produkte auf die Transportbahn aufgesetzt werden, und einem Übertragungspunkt, an dem die Produkte auf ein anderes Element, beispielsweise die Aufrichtbahn und/oder eine andere Transportbahn, übertragen werden, gebildet sein. Beispielsweise können die Transportbahnen als Förderbänder ausgebildet sein, die über mehrere verschiebbare Rollen geführt sind, so dass durch Verschiebung von Rollen zueinander eine Streckenlänge des Förderbands zwischen einzelnen Rollen variiert werden kann, wobei eine Gesamtlänge des Förderbands konstant bleibt. Alternativ können als Förderbänder ausgebildete Transportbahnen eine Ausgestaltung mit einer sogenannten Pull-Nose aufweisen, bei der ein vorderer Endbereich des Förderbands eingezogen werden kann, wodurch ein Endpunkt des Förderbands verschoben wird. Auch kann die Pull-Nose dazu eingesetzt werden, ein auf dem vorderen Endbereich angeordnetes Produkt durch den Einzug zur Übergabe an ein anderes Transportmittel herunterfallen zu lassen. Insbesondere ist die Veränderung der Streckenlänge dazu vorgesehen, ein Aufbringen der Produkte auf die Aufrichtbahn und/oder in Zusammenwirkung mit einer Verschiebung der Aufrichtbahn eine Veränderung eines Endpunktorts der Aufrichtbahn zu bewirken. Auch kann eine Veränderung der Streckenlänge dazu genutzt werden, eine Verzögerung oder Beschleunigung einer Zufuhr eines nächsten Produkts zu der Aufrichtbahn durch passende Verlängerung oder Verkürzung der Streckenlänge zu bewirken. Es kann insbesondere eine zusätzliche Anpassungsmöglichkeit von Zufuhrparametern erreicht werden.

Ferner wird vorgeschlagen, dass die Zwischentransportbahnen jeweils mit unterschiedlichen Geschwindigkeiten betreibbar sind. Insbesondere kann somit eine Zufuhr der Produkte zu der Aufrichtbahn an Abtransportbedingungen angepasst werden. Beispielsweise kann bei einem Abtransportstau eine Zufuhr verlangsamt werden, um Zeit zur Beseitigung des Abtransportstaus zu gewinnen, ohne die Produktaufstellvorrichtung vollständig zu stoppen. Es kann insbesondere eine zusätzliche Anpassungsmöglichkeit von Zufuhrparametern erreicht werden.

Weiterhin wird vorgeschlagen, dass die Abtransporteinheit zumindest eine Speichereinheit aufweist, die dazu vorgesehen ist, zumindest eine Stapelreihe zu einer Zwischenspeicherung aufzunehmen. Darunter, dass die Speichereinheit "zu einer Zwischenspeicherung der zumindest einen Stapelreihe" vorgesehen ist, soll insbesondere verstanden werden, dass in zumindest einem Betriebszustand Produkte, die in der zumindest einen Stapelreihe aufgestellt sind, mittels der Speichereinheit zeitweise gelagert werden, bevor sie von dort zu einem Abtransportmittel der Abtransporteinheit, beispielsweise einem Förderband, transportiert werden, welches einen Weitertransport zur Weiterbehandlung, beispielsweise zu einer Verpackung in einer Verpackungsmaschine, durchführt. Insbesondere kann die Speichereinheit zumindest ein als Speicherband ausgebildetes Förderband umfassen, auf das aufgerichtete Produkte der Stapelreihe aufgestellte werden und von dem sie auf ein weiteres Abtransportband gefördert und sie zu einer Weiterbehandlung wie einer Verpackung geleitet werden. Insbesondere ist die Speichereinheit dazu vorgesehen, zumindest bei einer Stockung eines Abtransports von in der Stapelreihe aufgerichteten Produkten einer Produktkolonne, beispielsweise aufgrund eines Ausfalls einer Verpackungsmaschine, weitere aufgerichtete Produkte der Stapelreihe zeitweise zu lagern, so dass eine Aufstellung von Produkten der Produktkolonne zunächst fortgesetzt werden kann. Auf diese Weise kann vermieden werden, dass bei einer Abtransportstockung sofort eine Aufstellung von Produkten der Produktkolonne unterbrochen werden müsste, während die Abtransportstockung beseitigt wird. Auch kann die Speichereinheit dazu vorgesehen sein, bei einer unregelmäßigen Zufuhr von durch die Zufuhreinheit liegend angelieferten Produkten einer Produktkolonne einen Abtransport mit einer höheren Regelmässigkeit zu erreichen, indem bei einer höheren Zufuhr von Produkten eine größere Anzahl von aufgerichteten Produkten in der Speichereinheit zwischengespeichert werden oder diese dort eine längere Zeit zwischengespeichert werden, und bei einer niedrigeren Zufuhr ein aufgebauter Zwischenvorrat schneller abgebaut wird. Bevorzugt umfasst die Speichereinheit mehrere Förderbänder, die jeweils einer Stapelreihe zugeordnet sind. Grundsätzlich kann die Speichereinheit auch ein einzelnes Förderband, welches allen Stapelreihen zugeordnet ist, oder mehrere Förderbänder, die jeweils mehreren Stapelreihen zugeordnet sind, umfassen. Besonders bevorzugt können die mehreren Förderbänder mit unterschiedlichen Geschwindigkeiten gefahren werden und/oder sind in einer Länge veränderlich. Es kann insbesondere eine bei Störungen im Betriebsablauf bei einer Weiterbehandlung der Stapelreihen weiterhin betreibbare Produktaufstellvorrichtung, welche nicht sofort vollständig angehalten werden muss, und bei unregelmäßiger Zufuhr oder unregelmäßigem Abtransport mit gleichmässiger Geschwindigkeit betreibbare Produktaufstellvorrichtung erreicht werden.

Ferner wird ein Verfahren nach Anspruch 13 zur Aufstellung von Produkten mehrerer Produktkolonnen, die über eine gemeinsame Zufuhreinheit und/oder Abtransporteinheit transportiert und mittels zumindest einer Aufrichtbahn aufgerichtet werden, in jeweils einer Produktkolonne zugeordnete Stapelreihen, wobei in zumindest einem Betriebszustand Endglieder einer Stapelreihe für eine Anstellung eines folgenden Produkts der jeweiligen Produktkolonne mittels jeweils einer Stapelreihe zugeordneten Verschubmitteln verschoben werden, bei dem die Verschubmittel voneinander getrennt angesteuert werden, vorgeschlagen. Es kann insbesondere eine Anpassung eines Verfahrensablaufs an unterschiedliche Betriebsbedingungen in unterschiedlichen Produktkolonnen erreicht werden.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination.

Es zeigen:
- Fig. 1: eine Produktaufstellvorrichtung für eine Aufstellung von Produkte von acht Produktkolonnen jeweils in Stapelreihen mit jeweils einem einer Stapelreihe zugeordneten Verschubmitteln, die jeweils ein separat steuerbares Antriebsmittel aufweisen, in einer schematischen Ansicht von oben,
- Fig. 2: eine Darstellung eines Abschnitts der Produktaufstellvorrichtung für eine einzelne Produktkolonne in einer schematischen Seitenansicht,
- Fig. 3: eine Darstellung eines Abschnitts der Produktaufstellvorrichtung für eine einzelne Produktkolonne in einer schematischen Seitenansicht, wobei gegenüber Fig. 2 eine Aufrichtbahn und das Verschubmittel linear verschoben wurden, und
- Fig. 4: eine Darstellung eines Abschnitts der Produktaufstellvorrichtung für eine einzelne Produktkolonne mit einer Detaildarstellung der Aufrichtbahn und des Verschubmittels.

### Beschreibung des Ausführungsbeispiels

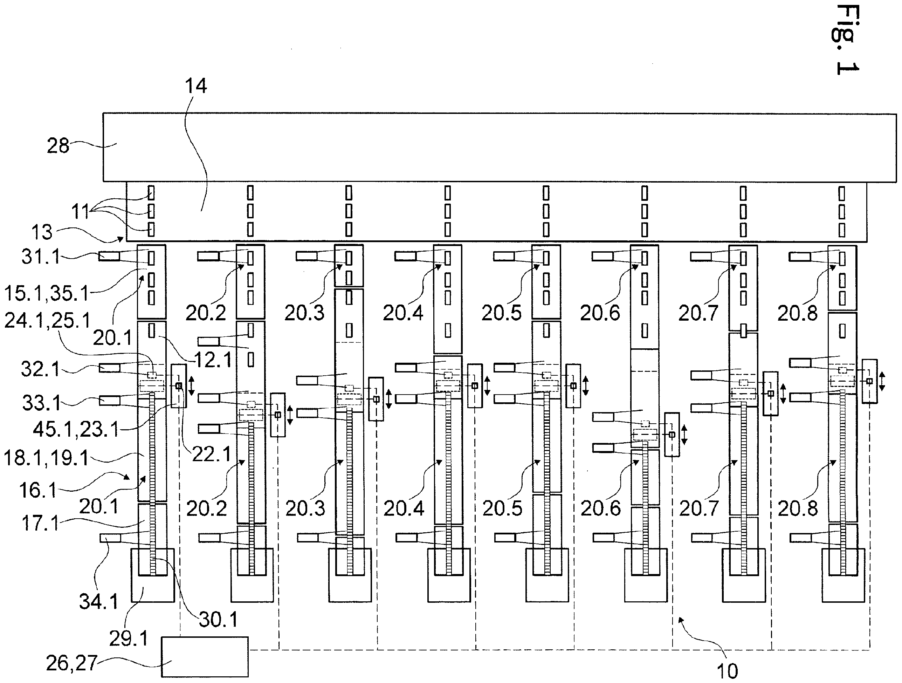

Figur 1 zeigt eine Produktaufstellvorrichtung 10 zu einer Aufstellung von Produkten 11 von acht Produktkolonnen 20.1, 20.2, 20.3, 20.4, 20.5, 20.6, 20.7, 20.8. Die Produktaufstellvorrichtung 10 weist jeweils identische Einheiten und Elemente für jede der acht Produktkolonnen 20.1, 20.2, 20.3, 20.4, 20.5, 20.6, 20.7, 20.8 auf. Die Einheiten und Elemente werden daher mit Indizierungsziffern 1-8 für die einzelnen Produktkolonnen 20.1, 20.2, 20.3, 20.4, 20.5, 20.6, 20.7, 20.8 in Fig. 1 dargestellt, wobei für eine bessere Erkennbarkeit der schematischen Darstellung in Fig. 1 für jede der acht Produktkolonnen 20.1, 20.2, 20.3, 20.4, 20.5, 20.6, 20.7, 20.8 die identischen Einheiten und Elemente nur für die erste Produktkolonne 20.1 mit Bezugszeichen mit Indizierungsziffern versehen sind. Einheiten, die für jede der acht Produktkolonnen 20 gemeinsam sind, sind in Fig. 1 daran erkennbar, dass sie keine Indizierungsziffer aufweisen. Zur Verbesserung der Lesbarkeit der Beschreibung wird im Text auf Angabe der Indizierungsziffern der jeweiligen Einheiten und Elemente bei einer Beschreibung einer Funktion der Einheiten und Elemente verzichtet.

Die Produktaufstellvorrichtung 10 ist zu einer Aufstellung von Produkten 11 der Produktkolonnen in Stapelreihen 30., die jeweils einer Produktkolonne 20 zugeordnet sind, mit einer für die mehreren Produktkolonnen 20 gemeinsamen Zufuhreinheit 13 für flach liegende Produkte 11 und jeweils einer Produktkolonne 20 zugeordneten Abtransporteinheiten 16 für in Stapelreihen 30 aufgestellte Produkte 11, mit jeweils einer Aufrichtbahn 12 zur Aufrichtung der Produkte 11 jeweils einer Produktkolonne 20, und mit acht Verschubmitteln 21, welche jeweils einer Stapelreihe 30 zugeordnet und dazu vorgesehen sind, eine Aufnahmelücke für eine Anstellung eines folgenden Produkts 11 der jeweiligen Produktkolonne 20, das an die Stapelreihe 30 angestellt werden soll, zu erzeugen. Jedes der Verschubmittel 21 weist ein separat steuerbares Antriebsmittel 22 auf.

Die Produktaufstellvorrichtung 10 ist zur Durchführung eines Verfahrens zur Aufstellung von Produkten 11 mehrerer Produktkolonnen 20, die über eine gemeinsame Zufuhreinheit 13 und separate Abtransporteinheiten 16 transportiert und mittels zumindest einer Aufrichtbahn 12 aufgerichtet werden, in jeweils einer Produktkolonne 20 zugeordnete Stapelreihen 30, wobei Endglieder 38 einer Stapelreihe 30 für eine Anstellung eines folgenden Produkts 11 der jeweiligen Produktkolonne 20 mittels jeweils einer Stapelreihe 30 zugeordneten Verschubmitteln 21 verschoben werden, wobei die Verschubmittel 21 voneinander getrennt angesteuert werden, vorgesehen.

Die Produkte 11 sind von quaderförmigen Gebäckstücken mit einer rechteckigen Grundform, welche als Biskuits bezeichnet werden, gebildet, die auf einer Seite mit dem maximalen Flächeninhalt liegend aus einer Herstellvorrichtung 28, die als letztes Element einen Ofen umfasst, austreten, von der Zufuhreinheit 13 an die Aufrichtbahn 12 angeliefert werden, und durch Durchlauf der Aufrichtbahn 12 auf Kanten mit kurzen Seiten aufgerichtet in Stapelreihen 30 aufgestellt und von der Abtransporteinheit 16 zu Verpackungsvorrichtungen 29 transportiert werden. Alternativ kann die Herstellvorrichtung 28 als letztes Element beispielsweise einen Kühltunnel umfassen. In einer alternativen Ausgestaltung kann in der Herstellvorrichtung 28 zusätzlich eine Vorrichtung zur Auftragung von Creme auf die Produkte 11 und Verbindung zweier Biskuits mit Cremeseiten zu einer Sandwichform integriert sein. In der Verpackungsvorrichtung 29 wird jeweils eine bestimmte Anzahl von Produkten 11 aus der Stapelreihe 30 in einer Verpackungsgruppe abgetrennt und verpackt. In diesem Ausführungsbeispiel der Erfindung ist jeder Produktkolonne 20 eine einzelne Verpackungsvorrichtung 29 zugeordnet.

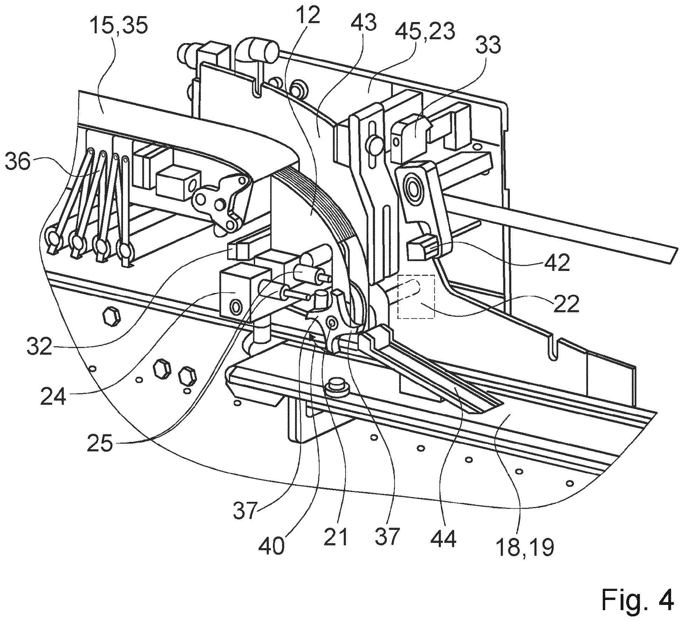

Die Zufuhreinheit 13 umfasst ein gemeinsames Zufuhrband 14 und eine Zwischentransporteinheit 15 mit einer Mehrzahl von in einer Transportlänge veränderlichen Zwischentransportbahnen 35, die jeweils einer Produktkolonne 20 zugeordnet sind. Eine Längenveränderung der Transportlänge der Zwischentransportbahnen 35 wird über eine Pull-Nose-Funktion bewirkt, wobei eine ziehharmonikaähnliche Ausziehmechanik 36 (Fig. 4) sicherstellt, dass die Zwischentransportbahnen 35 unabhängig der Transportlänge genügend abgestützt ist. Die Zwischentransportbahnen 35 sind jeweils mit unterschiedlichen Geschwindigkeiten betreibbar, so dass zum Ausgleich einer abnehmenden Anlieferungsdichte die Produkte 11 durch Beschleunigung der Zwischentransportbahn 35 schneller in der Zufuhreinheit 13 an die Aufrichtbahn 12 geführt werden können oder die Produkte 11 durch Verlangsamung der Zwischentransportbahn 35 zum Ausgleich einer zunehmenden Anlieferungsdichte langsamer in der Zufuhreinheit 13 an die Aufrichtbahn 12 geführt werden können. Die Produkte 11 werden mit dem gemeinsamen Zufuhrband 14 aus der Herstellvorrichtung 28 ausgeführt.

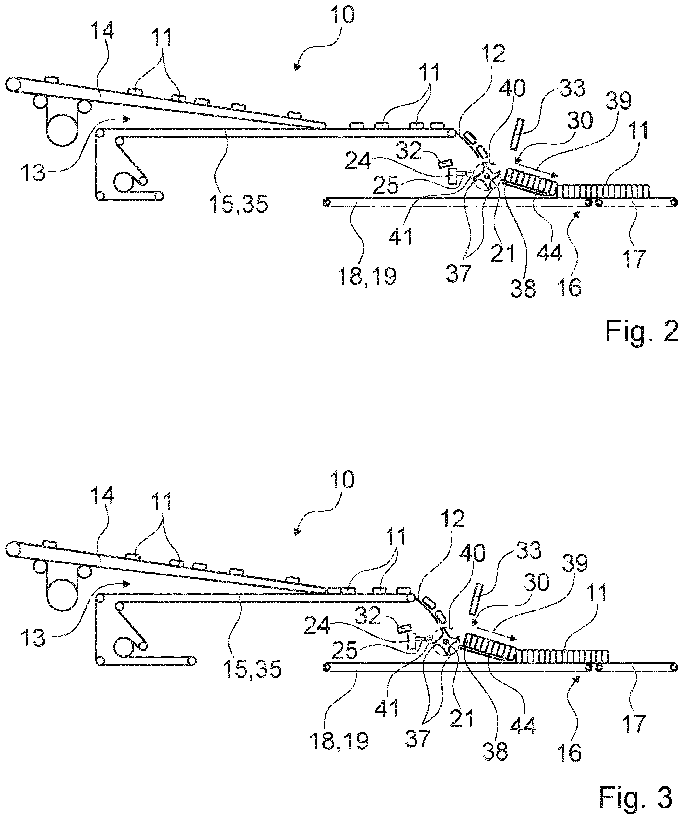

Die Abtransporteinheiten 16 umfassen für jede Produktkolonne 20 eine Speichereinheit 18 mit einem Speicherband 19 und einem Abtransportband 17, das die Stapelreihen 30 von dem Speicherband 19 übernimmt oder auf das alternativ die Produkte 11 von der Aufrichtbahn 12 zur Bildung der Stapelreihen 30 direkt aufgestellt werden. Nach Durchlauf der Aufrichtbahn 12 werden die Produkte 12 zuerst auf einer gerade Rutsche 44 aufgestellt, von der aus sie auf das Speicherband 19 rutschen (Fig. 2). Das Abtransportband 17 transportiert die Stapelreihen 30 in die Verpackungsvorrichtung 29. Die Speichereinheit 18 ist dazu vorgesehen, die Stapelreihen 30 zu einer Zwischenspeicherung aufzunehmen. In einer alternativen Ausbildung der Produktaufstellvorrichtung 10 kann die Abtransporteinheit 16 für alle Produktkolonnen 20 gemeinsam vorhanden sein und ein gemeinsames, durchgehendes Abtransportband 17 aufweisen, das die Stapelreihen 30 der Verpackungsvorrichtung 29 zuführt. Eine Funktionsweise der Speichereinheit 18 wird weiter unten genauer ausgeführt. Auch können in einer alternativen Ausbildung der Produktaufstellvorrichtung 10 die Stapelreihen 30 zu einer anderen Weiterbehandlung als einer Verpackung, beispielsweise einer Bestreuung oder einer Füllung hohler Innenräume, zugeführt werden.

Die separat steuerbaren Antriebsmittel 22 der Verschubmittel 21 umfassen jeweils einen separaten Antriebsmotor, der mit einer eigenen Welle mit dem jeweiligen Antriebsmittel 22 verbunden ist. Die Antriebsmittel 22 weisen jeweils eine Linearverschiebungseinheit 23 auf, die zu einer Linearverschiebung der Antriebsmittel 22 in eine Richtung parallel zu einer Abtransportrichtung 39 der Produkte 11 in den Produktkolonnen 20 vorgesehen ist. Die Linearverschiebung ist dazu vorgesehen, eine Position eines Abstellorts für ein folgendes Produkt 11 der Produktkolonne 20 an die Stapelreihe 30 auf der Abtransporteinheit 16 zu variieren. Die Linearverschiebungseinheiten 23 wirken dabei mit der Speichereinheit 18 zu einem Ausgleich einer unregelmäßigen Anlieferungsdichte und/oder Abtransportdichte der Produkte 11 zusammen. Die Linearverschiebungseinheiten 23 können alternativ oder zusätzlich auch dazu vorgesehen und ausgebildet sein, die Antriebsmittel 22 in eine Richtung senkrecht zur der Abtransportrichtung 39 der Produkte 11 in den Produktkolonnen 20 zu verschieben, um eine Kontaktposition der Verschubmittel 21 an den zu verschiebenden Produkten 11 zu variieren.

Das Verschubmittel 21 ist als sogenanntes Separierrad, ein auf der Welle gelagertes Zahnrad mit vier über einen Umfang gleichmäßig verteilten vorstehenden Zahnelementen 37, ausgebildet. Das Verschubmittel 21 wird über die Welle in Rotation in eine Drehrichtung 40 versetzt, wobei durch die Rotation ein mit einem Produkt 11 in Kontakt kommendes Zahnelement 37 auf das Produkt 11 eine Kraft ausübt und dieses in Abtransportrichtung 39 verschiebt, so dass eine Aufnahmelücke für eine Anstellung eines folgenden Produkts 11 an die Stapelreihe 30 erzeugt wird. In alternativen Ausführungen kann das Verschubmittel 21 beispielsweise als eine Kurbelschwinge ausgebildet sein oder die Kraft mittels Luftdruck auf das zu verschiebende Produkt 11 ausüben. Das zu verschiebende Produkt 11 ist von einem Endglied 38 der Stapelreihe 30 gebildet. Zusätzlich zu der Verschiebung in Abtransportrichtung 39 wird das Endglied 38 durch das Verschubmittel 21 in Abtransportrichtung 39 gekippt, so dass das Endglied 38 teilweise auf einem in der Stapelreihe 30 benachbartem Produkt 11 zu liegen kommt. Die Aufstellung in der Stapelreihe 30, bei der die in der Stapelreihe 30 aufgestellten Produkte 11 in Abtransportrichtung 39 gekippt sind, wird auch als Aufschindelung der Produkte 11 bezeichnet.

Die Produktaufstellvorrichtung 10 umfasst ferner Aufrichthilfseinheiten 24, die jeweils einer Produktkolonne 20 zugeordnet und dazu vorgesehen sind, die Aufrichtung der Produkte 11 zu unterstützen. Die Aufrichthilfseinheiten 24 weisen jeweils eine Luftdüse 25 auf (Fig. 2). Die Luftdüsen 25 werden zur Aufbringung eines Luftstroms 41 auf das zu verschiebende Produkt 11 angesteuert, um ein Zurückkippen des Produkts 11 entgegen der Abtransportrichtung 39 während der Verschiebung zu verhindern. Der Luftstrom 41 wird dabei von der Luftdüse 25 oberhalb eines Schwerpunkts des zu verschiebenden Produkts 11 auf das Produkt 11 aufgebracht. In einer alternativen Ausgestaltung kann die Luftdüse 25 auch zu einer permanenten Aussendung eines Luftstroms 41 ausgebildet sein. Die Produktaufstellvorrichtung 10 umfasst für jede Produktkolonne 20 eine erste Sensoreinheit 31, eine zweite Sensoreinheit 32, eine dritte Sensoreinheit 33. und eine vierte Sensoreinheit 34, die jeweils dazu vorgesehen sind, Produkte 11 einer Produktkolonne 20 zu detektieren und Positionierungsdaten der Produkte 11 der Produktkolonne 20aufzunehmen. Die Sensoreinheiten 31, 32, 33, 34, die jeweils einer der Produktkolonnen 20 zugeordnet sind, weisen jeweils optische Sensorelemente auf, die zur Ermittlung der Positionierungsdaten vorgesehen sind. Die Sensoreinheit 32 ist als Lichtschranke ausgebildet und umfasst eine Lichtquelle, einen Reflektor 42, der Licht der Lichtquelle zurückwirft und eine Photodiode, die reflektiertes Licht detektiert. Die Sensoreinheit 33 ist als Lichttaster ausgebildet, bei dem Lichtquelle und Photodiode in einem gemeinsamen Gehäuse untergebracht sind und ein Produkt 11 durch Auswertung von dem Produkt 11 reflektierten Lichts detektiert wird und seine Positionierungsdaten ermittelt werden. In alternativen Ausgestaltungen der Produktaufstellvorrichtung 10 ist es vorstellbar, dass die Sensoreinheiten 31, 32, 33, 34 andersartig, beispielsweise als Kamera ausgebildete optische Sensorelemente, oder Sensorelemente aufweisen, die anderer physikalische Messgrößen als optische Messgrößen messen. Die erste Sensoreinheit 31 ist zur Messung von Positionierungsdaten von Produkten 11, die sich auf der Zwischentransportbahn 35 der Zwischentransporteinheit 15 befinden, vorgesehen und ermittelt die Positionierungsdaten von angelieferten Produkten 11 für eine Steuerung, die auf eine Anzahldichte und Anlieferungsgeschwindigkeit abgestimmt ist. Die zweite Sensoreinheit 32 ist dazu vorgesehen, Positionierungsdaten von auf der Aufrichtbahn 12 befindlichen Produkten 11 zu ermitteln. Die dritte Sensoreinheit 33 ist dazu vorgesehen, Positionierungsdaten eines zuletzt verschobenen Produkts 11, welches ein Ende der jeweiligen Stapelreihe 30 bildet, zu ermitteln. Die dritte Sensoreinheit 33 wird dazu genutzt, ein Umfallen des zuletzt verschobenen Produkts 11 zu detektieren, um durch Anpassung einer Lage der Aufrichtbahn 12 und eine Linearverschiebung des Verschubmittels 21 oder durch eine Anpassung der Speichereinheit 18 ein Aufstellen von Produkten 11, die die Aufrichtbahn 12 durchlaufen haben, auf das umgefallene zuletzt verschobene Produkt 11 zu vermeiden und somit Betriebsablaufstörungen zu vermeiden. Die vierte Sensoreinheit 34 ist dazu vorgesehen, Positionierungsdaten von Produkten 11 auf einem Abtransportband 17 zu detektieren und insbesondere aus den Positionierungsdaten ein Stocken eines Abtransports zu sensieren.

Die Produktaufstellvorrichtung 10 weist eine für alle Produktkolonnen 20 gemeinsame Antriebssteuereinheit 26 auf, die die Verschubmittel 21 in Abhängigkeit der aufgenommenen Positionierungsdaten anzusteuern. Die Antriebssteuereinheit 26 ist dazu vorgesehen, das Verschubmittel 21 synchronisiert zu einem auf der der Produktkolonne 20, dem das jeweilige Verschubmittel 21 zugeordnet ist, zugeordneten Aufrichtbahn 12 befindlichen Produkt 11 anzusteuern. Positionierungsdaten des auf der Aufrichtbahn 12 befindlichen Produkts 11 werden mittels der Sensoreinheit 32 ermittelt und an die Antriebssteuereinheit 26 übertragen. Die Antriebssteuereinheit 26 steuert das Verschubmittel 21 für jedes Produkt 11, welches für eine Erzeugung einer Aufnahmelücke verschoben werden soll, jeweils mit einem einzelnen Verschiebetakt an. In einem einzelnen Verschiebetakt wird das Produkt 11 ein einzelnes Mal von dem Verschubmittel 21 mit einer Kraft beaufschlagt. Das Produkt 11 wird somit weniger belastet als in einer bisher üblichen Produktaufstellvorrichtung, bei der Verschubmittel 21 für mehrere Produktkolonnen 20 mit einem gemeinsamen Antriebsmittel 22 angetrieben werden. Bei den bisher üblichen Produktaufstellvorrichtungen wird zur Sicherstellung, dass jedes Produkt 11, welches eine Aufrichtbahn 12 durchlaufen hat, durch ein Verschubmittel 21 verschoben wird, eine Antriebsgeschwindigkeit der Verschubmittel 21 höher als eine mittlere Durchlaufgeschwindigkeit der Produkte 11 durch die Aufrichtbahn 12 gewählt, wodurch Produkte 11 teilweise mehrfach durch das Verschubmittel 21 mit einer Kraft beaufschlagt werden. Die Produktaufstellvorrichtung 10 umfasst ferner eine Verschiebungssteuereinheit 27, die die Linearverschiebungseinheiten 23 in Abhängigkeit der aufgenommenen Positionierungsdaten ansteuert. Die Linearverschiebungseinheiten 23 werden in Abhängigkeit der durch die Sensoreinheiten 31, 33, 34 ermittelten Positionierungsdaten angesteuert. In alternativen Ausgestaltungen der Produktaufstellvorrichtung 10 kann für jedes Verschubmittel 21 eine separate Antriebssteuereinheit 26 und/oder für jede Linearverschiebungseinheit 23 eine separate Verschiebungssteuereinheit 27 eingesetzt werden.

Die Speichereinheit 18 umfasst ein Speicherband 19, auf dem die Produkte 11, die die Aufrichtbahn 12 durchlaufen haben, aufgestellt werden. Durch eine Verschiebung der Aufrichtbahn 12 entlang oder entgegen der Abtransportrichtung 39 mittels eines nicht genauer dargestellten Bewegungsmittels und Linearverschiebung des der Aufrichtbahn 12 zugeordneten Verschubmittels 21 durch die Linearverschiebungseinheit 23 des Verschubmittels 21 wird ein Aufsetzort der Produkte 11 auf dem Speicherband 19 verändert. Das Speicherband 19 kann in einer Transportlänge verändert werden und mit verschiedenen Geschwindigkeiten gefahren werden. Speicherbänder 19, die unterschiedlichen Produktkolonnen 20 zugeordnet sind, können unabhängig voneinander mit unterschiedlichen Geschwindigkeiten gefahren werden. Verzögert sich eine Verpackung von Produkten 11 der Stapelreihe 30 durch die Verpackungsvorrichtung 29 oder fällt die Verpackungsvorrichtung 29 aus, so können das Speicherband 19 und das Abtransportband 17, das die Verpackungsvorrichtung 29 beliefert, mit einer geringeren Geschwindigkeit betrieben oder angehalten werden und gleichzeitig durch Verschiebung der Aufrichtbahn 12 entgegen der Abtransportrichtung 39 das Speicherband 19 der Speichereinheit 18 weiter mit der Stapelreihe 30 besetzt werden. Solange das Speicherband 19 noch Kapazität zur Anstellung weiterer Produkte 11 an die Stapelreihe 30 aufweist, kann somit die Aufstellung der Produkte 11 der jeweiligen Produktkolonne 20 in Stapelreihen 30 fortgesetzt werden.

Es ist somit nicht notwendig, bei Eintritt einer Betriebsstauung, bei dem sich eine Verpackung durch die Verpackungsvorrichtung 29 verzögert, oder eines Betriebsstops der Verpackungsvorrichtung 29 sofort eine Aufstellung der Produkte 11 in die Stapelreihe 30 zu unterbrechen, während die Betriebsstauung oder der Betriebsstop beseitigt wird. Auch ist es nicht notwendig, aus der Herstellvorrichtung 28 austretende Produkte 11 der Produktkolonne 20, deren zugeordnete Verpackungsvorrichtung 29 eine Betriebsstauung oder einen Betriebsstop erleidet, aus dem Weiterverarbeitungsprozess gleich nach Eintritt der Betriebsstauung oder des Betriebsstops vor oder nach Durchlauf der Aufrichtbahn 12 zu entfernen. Durch die Ausbildung der Verschubmittel 21 mit separat ansteuerbaren Antriebsmitteln 22, separat steuerbaren Linearverschiebungseinheiten 23 und Anordnung der Verschubmittel 21 jeweils auf einer separaten Welle kann der Aufsetzort für Produkte 11 auf dem Speicherband 19 für jede Produktkolonne 20 individuell eingestellt werden, so dass eine Betriebsstauung oder ein Betriebsstop bei einer Weiterverarbeitung einer Stapelreihe 30 einer Produktkolonne 20 durch die Verpackungsvorrichtung 29 durch Aufbau eines entsprechenden Speichervorrats der Stapelreihe 30 zumindest zeitweise ausgeglichen werden kann, so dass eine Aufstellung von Produkten 11 einer jeweiligen Produktkolonne 20 zumindest zeitweise fortgeführt werden kann, anstatt die Produktkolonne 20 sofort stoppen oder Produkte 11 der Produktkolonne 20 aus der Produktaufstellvorrichtung entfernen zu müssen. Entsprechend kann bei Anlieferungsstops oder Anlieferungsverzögerungen die Weiterverarbeitung von Produkten 11 der jeweiligen Produktkolonne 20 durch Abbau eines Speichervorrat der jeweiligen Produktkolonne 20 länger fortgesetzt werden, als ohne Speichermöglichkeit, so dass zusätzliche Zeit gewonnen wird, um den Anlieferungsstop oder die Anlieferungsverzögerungen zu beseitigen, ohne dass die jeweilige Produktkolonne 20 für eine Weiterverarbeitung nicht zur Verfügung steht. Auch muss nicht bei Eintritt der Betriebsstauung oder des Betriebsstops die gesamte Produktaufstellvorrichtung 10 angehalten werden, während die Betriebsstauung oder der Betriebsstop beseitigt wird, wie dies bei vorher bekannten Produktaufstellvorrichtungen 10, bei denen mehrere Verschubmittel 21 auf einer gemeinsamen Welle angeordnet sind und somit nicht gegeneinander verschoben werden können, notwendig ist. Beispielhaft ist ein solcher Vorgang in den Fig. 2 und 3 dargestellt. In Fig. 3 ist schematisch ein Betriebszustand der Produktaufstellvorrichtung 10 gezeigt, in dem gegenüber einem in Fig. 2 dargestellten Betriebszustand durch Verschiebung der Aufrichtbahn 12 und Linearverschiebung des Verschubmittels 21 das Speicherband 19 der Speichereinheit 18 weiter aufgefüllt wurde. Das Speicherband 19 und das Abtransportband 17 sind dabei angehalten, so dass die Stapelreihe 30 unbewegt ist und folgende Produkte 11 durch andauernde Verschiebung der Aufrichtbahn 12 und Linearverschiebung des Verschubmittels 21 nach hinten an die Stapelreihe 30 angestellt wird. Während das Speicherband 19 besetzt wird und das Speicherband 19 und das Abtransportband 17 angehalten sind, kann eine Betriebsstauung oder ein Betriebsstop der Verpackungsvorrichtung 29 beseitigt werden. Nach Beseitigung der Betriebsstauung oder des Betriebsstops werden das Speicherband 19 und das Abtransportband 17 wieder in Bewegung versetzt und ein aufgespeicherter Vorrat auf dem Speicherband 19 allmählich abgebaut. Die Zwischenspeicherung in der Speichereinheit 18 wird durch die Zwischentransporteinheit 15 mit der Zwischentransportbahn 35 unterstützt, in dem die Zwischentransportbahn 35 verlängert und mit verringerter Geschwindigkeit betrieben wird, so dass Produkte 11 auch mit der Zwischentransporteinheit 15 zwischengespeichert werden.

Die Speichereinheit 18 und die Zwischentransporteinheit 15 werden auch dazu genutzt, bei unregelmäßigem Ausstoß von Produkten 11 aus der Herstellvorrichtung 28 durch Anpassung von Transportgeschwindigkeiten und durch Zwischenspeicherung der Produkte 11 vor oder nach Aufstellung in Stapelreihen 30 eine gleichmäßige Zuführung zu den Verpackungsvorrichtungen 29 zu erreichen, so dass diese mit gleichmäßigen Geschwindigkeiten betrieben werden können. Dadurch wird ein gleichmäßiger Ausstoß von Verpackungen mit verpackten Verpackungsgruppen erreicht.

Fig. 4 zeigt einen Teilabschnitt der Produktaufstellvorrichtung 10 in einer detaillierten Ansicht. Die Zwischentransportbahn 35 der Zwischentransporteinheit 15 ist mitsamt der ziehharmonikaähnlichen Ausziehmechanik 36 dargestellt. Die Zwischentransportbahn 35 der Zwischentransporteinheit 15 weist eine sogenannten "Pull-Nose-Funktion" auf, und kann an einem Ende aus- und eingefahren werden. Die Aufrichtbahn 12 ist fest an diesem Ende der Zwischentransportbahn 35 befestigt und wird somit mitbewegt. Die ziehharmonikaähnliche Ausziehmechanik 36 sorgt beim Auszug für eine ausreichende Stabilität des ausgezogenen Bereichs.In einer alternativen Ausgestaltung kann die Zwischentransportbahn 35 so ausgebildet sein, dass ein vorderer Teil der Zwischentransportbahn 35 eingezogen wird, wenn sich dort ein Produkt 11 befindet und das Produkt 11 dadurch auf die Aufrichtbahn 12 gesetzt wird. Mittels Positionierungsdaten der ersten Sensoreinheit 31 werden Daten zur Ansteuerung der "Pull-Nose-Funktion" gewonnen. Die Sensoreinheiten 32, 33, das Verschubmittel 21 mit dem Antriebsmittel 22 und die Aufrichthilfseinheit 24 mit der Luftdüse 25 sind an zwei Trägerschilden 43 eines verfahrbaren Schlittens 45 befestigt, wobei in Fig. 4 eines der Trägerschilde 43 ausgeblendet wurde. Der verfahrbare Schlitten 45 ist mit einem Antrieb für die Pull-Nose-Funktion gekoppelt und wird bei Änderung der Transportlänge der Zwischentransportbahn 35 entsprechend mitbewegt. Der verfahrbare Schlitten 45 bildet somit einen Teil der Linearverschiebungseinheit 23. Der verfahrbare Schlitten 45 wird von dem Antrieb für die Pull-Nose-Funktion angetrieben, kann aber grundsätzlich stattdessen einen eigenen Antrieb aufweisen. Das als Antriebsmotor ausgebildete Antriebsmittel 22 des Verschubmittels 21 ist in Fig. 4 durch das Trägerschild 43 verdeckt.

## Patentansprüche

1. Produktaufstellvorrichtung zu einer Aufstellung von Produkten (11) mehrerer Produktkolonnen (20) in Stapelreihen (30), die jeweils einer Produktkolonne (20) zugeordnet sind, mit einer für die mehreren Produktkolonnen (20) gemeinsamen Zufuhreinheit (13) für flach liegende Produkte (11), mit einer für jede Produktkolonne (20) separaten Abtransporteinheit (16) für in Stapelreihen (30) aufgestellte Produkte (11), mit einer für jede Produktkolonne (20) separaten Aufrichtbahn (12) zur Aufrichtung der Produkte (11) zumindest einer Produktkolonne (20), wobei die Aufrichtbahn (12) als bogenförmige Rutsche, als eine schräg verlaufende Ebene und/oder als eine schräge und/oder bogenförmige Umlenkstrecke eines umlaufenden Bandes und/oder Rundriemens ausgebildet ist, und mit einer Mehrzahl von Verschubmitteln (21), welche jeweils einer Stapelreihe (30) zugeordnet und dazu vorgesehen sind, eine Aufnahmelücke für eine Anstellung eines folgenden Produkts (11) der jeweiligen Produktkolonne (20) zu erzeugen, wobei jedes Verschubmittel (21) als ein von Mitteln der Abtransporteinheit (16) verschiedenes Mittel ausgebildet ist, welches dazu vorgesehen ist, zumindest ein aufgerichtetes Produkt (11) in Abfuhrrichtung zu verschieben, um eine Aufnahmelücke für ein folgendes, an die Stapelreihe (30) anzustellendes Produkt (11) zu erzeugen, wobei jedes Verschubmittel (21) ein separat steuerbares Antriebsmittel (22) aufweist, **gekennzeichnet durch** eine Mehrzahl von separat steuerbaren Linearverschiebungseinheiten (23), die zu einer Linearverschiebung zumindest der verschiedenen Verschubmittel (21) vorgesehen sind.

2. Produktaufstellvorrichtung nach Anspruch 1, **gekennzeichnet durch** zumindest eine Sensoreinheit (31, 32, 33, 34), die dazu vorgesehen ist, Produkte (11) zumindest einer Produktkolonne (20)zu detektieren.

3. Produktaufstellvorrichtung nach Anspruch 2, **gekennzeichnet durch** zumindest eine Antriebssteuereinheit (26), die dazu vorgesehen ist, zumindest eines der Verschubmittel (21) in Abhängigkeit der aufgenommenen Positionierungsdaten anzusteuern.

4. Produktaufstellvorrichtung nach Anspruch 3, **dadurch gekennzeichnet, dass** die Antriebssteuereinheit (26) dazu vorgesehen ist, das zumindest eine der Verschubmittel (21) synchronisiert zu einem auf der Aufrichtbahn (12) befindlichen Produkt (11) anzusteuern.

5. Produktaufstellvorrichtung nach Anspruch 3 oder 4, **dadurch gekennzeichnet, dass** die Antriebssteuereinheit (26) dazu vorgesehen ist, das zumindest eine der Verschubmittel (21) für jedes Produkt (11) lediglich mit einem einzigen Verschiebetakt anzusteuern.

6. Produktaufstellvorrichtung nach Anspruch 2, **gekennzeichnet durch** zumindest eine Verschiebungssteuereinheit (27), die dazu vorgesehen ist, zumindest eine der Linearverschiebungseinheiten (23) in Abhängigkeit der aufgenommenen Positionierungsdaten anzusteuern.

7. Produktaufstellvorrichtung zumindest nach Anspruch 2, **dadurch gekennzeichnet, dass** die zumindest eine Sensoreinheit (33) dazu vorgesehen ist, zumindest Positionierungsdaten eines zuletzt verschobenen Produkts (11) aufzunehmen.

8. Produktaufstellvorrichtung nach einem der vorhergehenden Ansprüche, **gekennzeichnet durch** Aufrichthilfseinheiten (24), die jeweils einer Produktkolonne (20) zugeordnet und dazu vorgesehen sind, die Aufrichtung der Produkte (11) zumindest zu unterstützen.

9. Produktaufstellvorrichtung nach Anspruch 8, **dadurch gekennzeichnet, dass** die Aufrichthilfseinheiten (24) jeweils zumindest eine Luftdüse (25) aufweisen.

10. Produktaufstellvorrichtung nach einem der vorhergehenden Ansprüche, **dadurch gekennzeichnet, dass** die Zufuhreinheit (13) zumindest eine Zwischentransporteinheit (15) mit einer Mehrzahl von in einer Transportlänge veränderlichen Zwischentransportbahnen (35), die jeweils einer Produktkolonne (20) zugeordnet sind, aufweist.

11. Produktaufstellvorrichtung nach Anspruch 10, **dadurch gekennzeichnet, dass** die Zwischentransportbahnen (35) jeweils mit unterschiedlichen Geschwindigkeiten betreibbar sind.

12. Produktaufstellvorrichtung nach einem der vorhergehenden Ansprüche, **dadurch gekennzeichnet, dass** die Abtransporteinheit (16) zumindest eine Speichereinheit (18), die dazu vorgesehen ist, zumindest eine Stapelreihe (30) zu einer Zwischenspeicherung aufzunehmen, aufweist.

13. Verfahren zur Aufstellung von Produkten (11) mehrerer Produktkolonnen (20), die über eine gemeinsame Zufuhreinheit (13) und mit einer für jede Produktkolonne (20) separaten Abtransporteinheit (16) transportiert und mittels einer für jede Produktkolonne (20) separaten Aufrichtbahn (12) aufgerichtet werden, in jeweils einer Produktkolonne (20) zugeordnete Stapelreihen (30), wobei in zumindest einem Betriebszustand Endglieder (38) einer Stapelreihe (30) für eine Anstellung eines folgenden Produkts (11) der jeweiligen Produktkolonne (20) mittels jeweils einer Stapelreihe (30) zugeordneten Verschubmitteln (21) verschoben werden, wobei die Verschubmittel (21) voneinander getrennt angesteuert werden, **dadurch gekennzeichnet, dass** die verschiedenen Verschubmittel (21) von einer Mehrzahl von separat ansteuerbaren Linearverschiebungseinheiten (23) der Produktaufstellvorrichtung linear verschoben werden.

## Claims

1. Product stand-up device for standing up products (11) of a plurality of product columns (20) in stack rows (30), which are each associated with a product column (20), comprising a feeding unit (13) for products (11) lying flat, which feeding unit is common to the plurality of product columns (20), comprising a removal transport unit (16), which removal transport unit is separate for each product column (20), for products (11) stood up in stack rows (30), comprising an erecting path (12), which erecting path is separate for each product column (20), for erecting the products (11) of at least one product column (20), wherein the erecting path (12) is formed as a curved chute and/or as a plane extending at an incline and/or as an inclined and/or curved diverting path of a circulating belt and/or round belt, and comprising a plurality of shifting means (21), which are each associated with a stack row (30) and are provided for producing an accommodating gap for lining up a following product (11) of the particular product column (20), wherein each shifting means (21) is a means that is formed differently than means of the removal transport unit (16) and that is provided in order to move at least one erected product (11) in the removal direction so as to produce an accommodating gap for a following product (11) to be lined up with the stack row (30), wherein each shifting means (21) has a separately controllable driving means (22), **characterized by** a plurality of separately controllable linear movement units (23), which are provided to move at least the various shifting means (21) in a linear manner.

2. Product stand-up device according to Claim 1, **characterized by** at least one sensor unit (31, 32, 33, 34), which is provided to detect products (11) of at least one product column (20).

3. Product stand-up device according to Claim 2, **characterized by** at least one drive control unit (26), which is provided to control at least one of the shifting means (21) depending on the recorded positioning data.

4. Product stand-up device according to Claim 3, **characterized in that** the drive control unit (26) is provided to control the at least one of the shifting means (21) in a manner synchronized with a product (11) located on the erecting path (12).

5. Product stand-up device according to Claim 3 or 4, **characterized in that** the drive control unit (26) is provided to control the at least one of the shifting means (21) for each product (11) merely with a single movement pulse.

6. Product stand-up device according to Claim 2, **characterized by** at least one movement control unit (27), which is provided to control at least one of the linear movement units (23) depending on the recorded positioning data.

7. Product stand-up device at least according to Claim 2, **characterized in that** the at least one sensor unit (33) is provided to record at least positioning data of a product (11) last moved.

8. Product stand-up device according to any one of the preceding claims, **characterized by** auxiliary erecting units (24), which are each associated with a product column (20) and are provided at least to assist the erection of the products (11).

9. Product stand-up device according to Claim 8, **characterized in that** the auxiliary erecting units (24) each have at least one air nozzle (25).

10. Product stand-up device according to any one of the preceding claims, **characterized in that** the feeding unit (13) has at least one intermediate transport unit (15) having a plurality of intermediate transport paths (35) variable in terms of transport length, which are each associated with a production column (20).

11. Product stand-up device according to Claim 10, **characterized in that** the intermediate transport paths (35) are each operable at different speeds.

12. Product stand-up device according to any one of the preceding claims, **characterized in that** the removal transport unit (16) has at least one storage unit (18), which is provided to receive at least one stack row (30) for temporary storage.

13. Method for standing up products (11) of a plurality of product columns (20) in stack rows (30) each associated with a product column (20), which products are transported via a common feeding unit (13) and with a removal transport unit (16), which removal transport unit is separate for each product column (20), and are erected by means of at least one erecting path (12), which erecting path is separate for each product column (20), wherein, in at least one operating state, end members (38) of a stack row (30) are moved by means of shifting means (21), which are each associated with a stack row (30), for a lining up of a following product (11) of the particular product column (20), wherein the shifting means (21) are controlled separately from one another, **characterized in that** the various shifting means (21) are moved linearly by a plurality of separately controllable linear movement units (23) of the product stand-up device.

## Revendications

1. Dispositif de disposition de produits pour une disposition de produits (11) de plusieurs colonnes de produits (20) en rangées empilées (30), qui sont respectivement associées à une colonne de produits (20), avec une unité d'alimentation (13) commune pour les multiples colonnes de produits (20) pour des produits (11) posés à plat, avec une unité d'évacuation (16) séparée pour chaque colonne de produits (20) pour des produits (11) disposés en rangées empilées (30), avec une voie de redressement (12) séparée pour chaque colonne de produits (20) pour le redressement des produits (11) d'au moins une colonne de produits (20), dans lequel la voie de redressement (12) est réalisée sous la forme d'une glissière en forme d'arc, d'un plan placé en oblique et/ou d'une section de déviation oblique et/ou en forme d'arc d'une bande tournante et/ou d'une courroie ronde, et avec une multiplicité de moyens de poussée (21), qui sont associés respectivement à une rangée empilée (30) et qui sont prévus pour produire un intervalle de réception pour une disposition d'un produit suivant (11) de la colonne de produits respective (20), dans lequel chaque moyen de poussée (21) est réalisé sous la forme d'un moyen différent de moyens de l'unité d'évacuation (16), qui est prévu pour déplacer au moins un produit redressé (11) dans la direction d'évacuation, afin de produire un intervalle de réception pour un produit suivant (11) à disposer dans la rangée empilée (30), dans lequel chaque moyen de poussée (21) présente un moyen d'entraînement pouvant être commandé séparément (22), **caractérisé par** une multiplicité d'unités de déplacement linéaire (23) pouvant être commandées séparément, qui sont prévues pour un déplacement linéaire au moins des différents moyens de poussée (21).

2. Dispositif de disposition de produits selon la revendication 1, **caractérisé par** au moins une unité de capteur (31, 32, 33, 34), qui est prévue pour détecter des produits (11) d'au moins une colonne de produits (20).

3. Dispositif de disposition de produits selon la revendication 2, **caractérisé par** au moins une unité de commande d'entraînement (26), qui est prévue pour commander au moins un des moyens de poussée (21) en fonction des données de positionnement enregistrées.

4. Dispositif de disposition de produits selon la revendication 3, **caractérisé en ce que** l'unité de commande d'entraînement (26) est prévue pour commander ledit au moins un des moyens de poussée (21) de façon synchronisée avec un produit (11) se trouvant sur la voie de redressement (12).

5. Dispositif de disposition de produits selon la revendication 3 ou 4, **caractérisé en ce que** l'unité de commande d'entraînement (26) est prévue pour commander ledit au moins un moyen de poussée (21) pour chaque produit (11) uniquement avec une seule cadence de déplacement.

6. Dispositif de disposition de produits selon la revendication 2, **caractérisé par** au moins une unité de commande de déplacement (27), qui est prévue pour commander au moins une des unités de déplacement linéaire (23) en fonction des données de positionnement enregistrées.

7. Dispositif de disposition de produits au moins selon la revendication 2, **caractérisé en ce qu'**il est prévu au moins une unité de capteur (33) pour enregistrer au moins des données de positionnement d'un produit (11) poussé en dernier lieu.

8. Dispositif de disposition de produits selon l'une quelconque des revendications précédentes, **caractérisé par** des unités d'auxiliaires de redressement (24), qui sont associées respectivement à une colonne de produits (20) et qui sont prévues au moins pour assister le redressement des produits (11).

9. Dispositif de disposition de produits selon la revendication 8, **caractérisé en ce que** les unités d'auxiliaires de redressement (24) présentent chacune au moins une buse à air (25).

10. Dispositif de disposition de produits selon l'une quelconque des revendications précédentes, **caractérisé en ce que** l'unité d'alimentation (13) présente au moins une unité de transport intermédiaire (15) avec une multiplicité de bandes transporteuses intermédiaires (35) avec une longueur de transport variable, qui sont respectivement associées à une colonne de produits (20).

11. Dispositif de disposition de produits selon la revendication 10, **caractérisé en ce que** les bandes transporteuses intermédiaires (35) peuvent être entraînées respectivement avec des vitesses différentes.

12. Dispositif de disposition de produits selon l'une quelconque des revendications précédentes, **caractérisé en ce que** l'unité d'évacuation (16) présente au moins une unité d'accumulation (18), qui est prévue pour contenir au moins une rangée empilée (30) pour un entreposage intermédiaire.

13. Procédé de disposition de produits (11) de plusieurs colonnes de produits (20), qui sont transportés par une unité d'alimentation commune (13) et avec une unité d'évacuation (16) séparée pour chaque colonne de produits (20) et qui sont redressés au moyen d'une voie de redressement (12) séparée pour chaque colonne de produits (20), en rangées empilées (30) respectivement associées à une colonne de produits (20), dans lequel dans au moins un état de fonctionnement on pousse des éléments terminaux (38) d'une rangée empilée (30) pour une disposition d'un produit suivant (11) de la colonne de produits respective (20) au moyen de moyens de poussée (21) respectivement associés à une rangée empilée (30), dans lequel on commande les moyens de poussée (21) séparément l'un de l'autre, **caractérisé en ce que** l'on déplace linéairement les différents moyens de poussée (21) d'une multiplicité d'unités de déplacement linéaire (23) pouvant être commandées séparément du dispositif de disposition de produits.
